Europäisches Patentamt

(19) European Patent Office

Office européen des brevets

(11) Publication number: **0 096 550**
**B1**

(12) **EUROPEAN PATENT SPECIFICATION**

(45) Date of publication of patent specification: **24.06.87**

(21) Application number: **83303203.0**

(22) Date of filing: **03.06.83**

(51) Int. Cl.⁴: **B 29 C 61/02**

(54) **Apparatus for heating thermal shrinkage tube.**

(30) Priority: **04.06.82 JP 95863/82**

(43) Date of publication of application:
**21.12.83 Bulletin 83/51**

(45) Publication of the grant of the patent:
**24.06.87 Bulletin 87/26**

(84) Designated Contracting States:
**CH DE FR GB IT LI SE**

(56) References cited:
**DE-A-2 845 039**
**FR-A-2 505 509**

(73) Proprietor: **SUMITOMO ELECTRIC INDUSTRIES LIMITED**
**No. 15, Kitahama 5-chome Higashi-ku**
**Osaka-shi Osaka 541 (JP)**

(73) Proprietor: **Nippon Telegraph and Telephone Corporation**
**1-6 Uchisaiwaicho 1-chome Chiyoda-ku Tokyo (JP)**

(72) Inventor: **Kaikii, Toshiaki c/o Yokohama Works Sumitomo Electric Industries Ltd. 1, Taya-cho Totsuka-ku Yokohama-shi Kanagawa (JP)**
Inventor: **Toda, Yuichi c/o Yokohama Works Sumitomo Electric Industries Ltd. 1, Taya-cho Totsuka-ku Yokohama-shi Kanagawa (JP)**
Inventor: **Matsuno, Koichiro c/o Yokohama Works Sumitomo Electric Industries Ltd. 1, Taya-cho Totsuka-ku Yokohama-shi Kanagawa (JP)**
Inventor: **Usui, Yuichi c/o Yokohama Works Sumitomo Electric Industries Ltd. 1, Taya-cho Totsuka-ku Yokohama-shi Kanagawa (JP)**
Inventor: **Matsumoto, Michito No. 231-2-243, Miwa 2-chome Mito-shi Ibaraki (JP)**

(74) Representative: **Cooper, Derek Robert et al Marks & Clerk Alpha Tower Suffolk Street Queensway Birmingham B1 1TT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

### Description

The present invention relates to an apparatus for heating a thermal shrinkage tube, for example to effect shrinkage when the tube is applied to reinforce a splice portion between optical fibres or the like.

Conventionally, a plurality of heaters have been used for heating a thermal shrinkage tube so as to cause shrinkage in the tube, for example, to protect a splice portion between optical fibres. In such a case, if air bubbles remain in the space between the fibre splice portion and the inner surface of the tube, the optical transmission loss at the splice portion becomes large. Therefore, it is necessary to make the inner surface of the tube adhere closely to the splice portion so as to purge the air bubbles completely. To this end, a technique has been developed wherein, after the splice portion has been covered by a thermal shrinkage tube, the tube is first heated so as to increase the temperature at a central portion thereof, thereby to cause the inner surface of the tube to adhere closely to the splice portion with no air bubbles being present. Then, the heat is successively and progressively applied to the opposite ends of the tube, thereby to remove the air bubbles from these parts also.

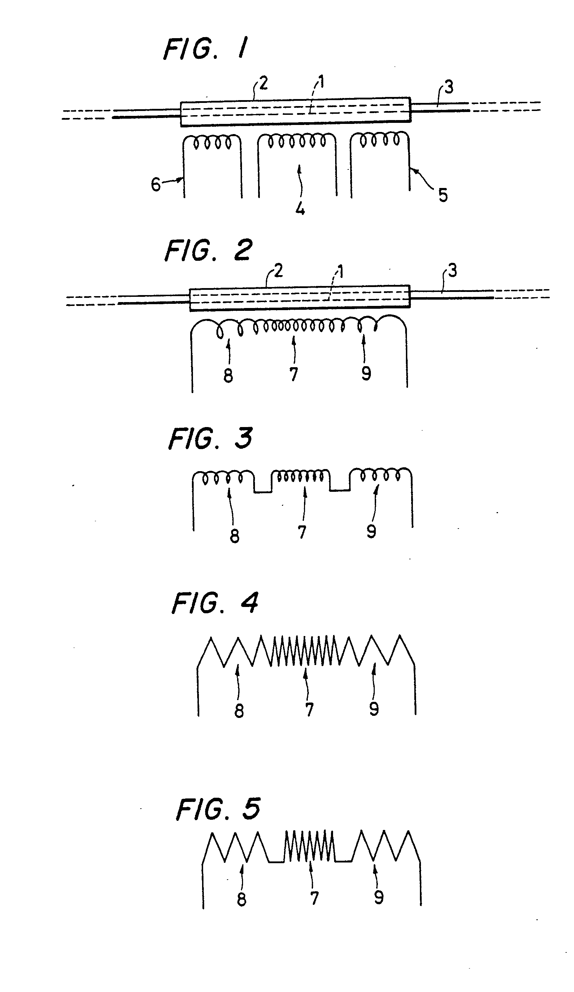

One example of this conventional technique is illustrated schematically in Figure 1 of the accompanying drawings, wherein reference numeral 1 designates the junction or splice portion between two optical fibres 3, and reference numeral 2 designates the thermal shrinkage tube. In this example, three separate wire heaters 4, 5 and 6 are provided along the longitudinal direction of the tube 2. The central heater 4 is first energised to cause a central portion of the tube 2 to shrink and thereby adhere closely to the splice portion 1. Then, the side heaters 5 and 6 are energized to cause the thermal shrinkage to progress towards the ends of the tube 2 by way of a so-called time-difference heating technique, wherein there is a lag between the energisation times of the central heater 4 and the side heaters 5 and 6. In this way, the tube 2 is caused in its entirety to adhere closely to the splice portion 1, so that no air bubbles remain therebetween.

This technique does, however, have the disadvantage that it is necessary to provide not only three separate wire heaters, but also three separate temperature rise control devices such as thermistors. Accordingly, the control circuitry for the heater is complex and requires a relatively large number of component parts, so that the overall heating device is expensive to produce.

In DE—A1—2 845 039 there is described an apparatus for heating a heat contractable heating jacket. The apparatus includes a single heating coil which has a uniform heating density along its length.

It is an object of the present invention to overcome these disadvantages.

According to one aspect of this invention there is provided an apparatus for heating a thermal shrinkage tube beginning at a central portion thereof and successively progressing to the ends thereof, characterised in that the apparatus comprises a single linear heating device in the form of a coil, the pitch of the windings of the coil varying along the length of the coil so that the heating density is greatest at the central portion of the coil heating device.

With this apparatus, the pitch will be small (giving rise to large heating density) at a central portion of the coil, and will be increased (thereby reducing the heating density) at the coil ends. The variation in heating density will provide the necessary time lag between the heating of the central and end portions of the tube, whereby a tube can be closely adhered to the splice portion between optical fibres, for example, along the whole of its length with no air bubbles present.

According to another aspect of this invention, there is provided an apparatus for heating a thermal shrinkage tube beginning at a central portion thereof and successively progressing to the ends thereof, characterised in that the apparatus comprises a single linear heating device which is generally saw-tooth in shape with the pitch of the teeth varying along the length thereof so that the heating density is greatest at the central portion of the heating device.

In the apparatus according to either aspect of this invention the desired heating effect can be obtained using only a single heating device and a single control circuit.

In the following description, the term "linear heating device" is intended to mean a heat generating device in the form of an elongated line (typically, a heating wire) or in the form of an elongated tube through which superheated steam, a high temperature gas or a high temperature fluid of low melting point is passed.

The invention will be further described by way of example, only with reference to the remaining figures of the accompanying drawings, in which:—

Figure 2 illustrates an apparatus for heating a thermal shrinkage tube according to the present invention, when applied to the reinforcement of a junction or splice portion between optical fibres, which apparatus utilizes a heating device in the form of a helical wire; and Figures 3, 4 and 5 are diagrams illustrating various other forms of heating device which can be used.

In contrast to the three separate heating devices employed in the conventional method described previously, the invention utilizes only a single linear heating device which, in the illustrated embodiments, takes the form of a continuous heating wire made for example from a metal foil, such as German silver foil. A central portion 7 of this wire is arranged so that it has a relatively dense heating effect, while the ends 8 and 9 thereof are arranged to have a relatively less dense heating effect. Source energy is uniformly passed through the heating wire: the source energy will generally be electric power, and an electrical resistance heating conductor will usually be employed as the elongated heating wire. Because of the greater heating density generated at the central portion of the wire, the central portion of the thermal shrinkage tube 2 will initially be heated and will shrink to adhere closely to the splice portion 1 between the optical fibres 3. Subsequently, the temperature rise will gradually progress from the central portion to the ends of the tube 2, thereby successively purging any air bubbles towards the tube ends. Thus, even though only a single heating wire is employed, the tube 2 can be closely adhered to the splice portion 1 over the whole of its length.

In the embodiment of Figure 2, the heating wire takes the form of a coil in which the pitch of the windings varies continuously along the length thereof, the pitch being smallest (giving rise to the highest heating effect) at the central portion 7 of the coil.

In Figure 3, the heating wire has a central portion 7 in which the heating density or number of turns is high, and two end portions 8 and 9 wherein the heating density or the number of turns is low, the ends portions 8 and 9 being separated from the central portion 7 by a certain distance in which the heating density is very low. In a specific example of such an arrangement for use with a splice portion 1 of about 60 mm in length, the heating wire is approximately the same length as the tube 2, its central high density portion 7 is 20 to 30 mm in length, the end low density portions 8 and 9 are each 5 to 10 mm in length, and each end portion is separated by a single wire from the central portion by a distance of 5 to 10 mm.

In an experimental set-up using the device shown in Figure 3, a temperature-adjusting thermistor was provided at the central winding portion 7 and the surface temperature of the tube 2 was adjusted to equal 160°C. Under this condition, a gradual temperature gradient was confirmed with the end portions 8 and 9 being at 130°C. In this case, using a thermal shrinkage tube of a transparent material, it was observed that close adhesion between the inner surface of the tube and the optical fibres began at the central portion of the tube and progressed from there towards the end portions, so that air bubbles were purged at the end portions of the tube. When the set temperature at the central portion was increased to 190°C, the temperature at each of the end portions increased to about 160°C, and it was confirmed that shrinkage, close adhesion and end-portion protection were again efficiently performed.

The embodiments illustrated in Figures 4 and 5 are similar to those described above with reference to Figures 2 and 3 respectively, except that the heating wire is formed in a bent or saw-tooth shape instead of being helically wound.

Although the invention has been described above in relation to the reinforcement of splice portions between optical fibres, it will be manifest that the apparatus have a much more generally applicability than this, and can be used for any purpose where a thermal shrinkage tube is to be heated.

## Claims

1. Apparatus for heating a thermal shrinkage tube (2) beginning at a central portion thereof and successively progressing to the ends thereof, characterised in that the apparatus comprises a single linear heating device (7, 8, 9) in the form of a coil, the pitch of the windings of the coil varying along the length of the coil so that the heating density is greatest at the central portion (7) of the heating device (7, 8, 9).

2. Apparatus for heating a thermal shrinkage tube (2) beginning at a central portion thereof and successively progressing to the ends thereof, characterised in that the apparatus comprises a single linear heating device (7, 8, 9) which is generally saw-toothed in shape with the pitch of the teeth varying along the length thereof so that the heating density is greatest at the central portion (7) of the heating device.

3. Apparatus as claimed in claim 1 or claim 2, characterised in that the heating density varies continuously from the central portion (7) to the end portions (8, 9) of the heating device (7, 8, 9).

4. Apparatus as claimed in claim 1 or claim 2, characterised in the heating density is relatively high in the central portion of the device (7, 8, 9) and relatively low in the end portions (8, 9) thereof, and the end portions (8, 9) are spaced from the central portion (7) by parts of the heating device (7, 8, 9) having a very low heating density.

5. Apparatus as claimed in any one of the preceding claims, characterised in that the apparatus further comprises means for detecting the temperature of the linear heating device (7, 8, 9).

## Patentansprüche

1. Vorrichtung zum Erhitzen eines wärmeschrumpfbaren Rohres (2), beginnend an einem mittleren Abschnitt desselben, und allmählich fortschreitend zu den Enden desselben, dadurch gekennzeichnet, daß die Vorrichtung eine einzige, lineare Heizvorrichtung (7, 8, 9) in Form einer Spule enthält, deren Windungssteigung längs der Länge der Spule derart variiert, daß die Heizdichte im mittleren Abschnitt (7) der Heizvorrichtung (7, 8, 9) am größten ist.

2. Vorrichtung zum Erhitzen eines wärmeschrumpfbaren Rohres (2), beginnend an einem mittleren Abschnitt desselben und allmählich fortschreitend zu den Enden desselben, dadurch gekennzeichnet, daß die Vorrichtung eine einzige lineare Heizvorrichtung (7, 8, 9) enthält, die im wesentlichen sägezahnförmige Gestalt aufweist, wobei die Teilung der Zähne längs der Länge derselben derart variiert, daß die Heizdichte im mittleren Abschnitt (7) der Heizvorrichtung am größten ist.

3. Vorrichtung nach Anspruch 1 oder 2, dadurch gekennzeichnet, daß die Heizdichte kontinuierlich vom mittleren Abschnitt (7), zu den Endabschnitten (8, 9) der Heizvorrichtung (7, 8, 9) variiert.

4. Vorrichtung nach Anspruch 1 oder 2, dadurch gekennzeichnet, daß die Heizdichte im mittleren Abschnitt der Vorrichtung (7, 8, 9) relativ hoch ist und in den Endabschnitten (8, 9) derselben relativ niedrig ist, und daß die Endabschnitte (8, 9) von dem mittleren Abschnitt (7) durch Teile der Heizvorrichtung (7, 8, 9) getrennt sind, die eine sehr niedrige Heizdichte aufweisen.

5. Vorrichtung nach einem der vorhergehenden Ansprüche, dadurch gekennzeichnet, daß die Vorrichtung weiterhin eine Einrichtung zur Ermittlung der Temperatur der linearen Heizvorrichtung (7, 8, 9) enthält.

## Revendications

1. Appareil pour chauffer un tube thermorétractable (2) en commençant par une partie centrale de celui-ci et en progressant successivement vers ses extrémités, cet appareil étant caractérisé en ce qu'il comporte un seul dispositif chauffant linèaire (7, 8, 9) sous la forme d'un enroulement dont les spires ont un pas qui varie le long de sa longueur, de sorte que la densité de chauffage est plus grande à la partie centrale (7) du dispositif chauffant (7, 8, 9).

2. Appareil pour chauffer un tube thermorétractable (2) en commençant par une partie centrale de celui-ci et en progressant successivement vers se extrémités, cet appareil étant caractérisé en ce qu'il comporte un seul dispositif chauffant linéaire (7, 8, 9) qui possède une forme générale en dents de scie dont le pas varie le long de la longueur de ce dispositif, de sorte que la densité de chauffage est plus grande à la partie centrale (7) de ce dispositif chauffant.

3. Appareil selon la revendication 1 ou revendication 2, caractérisé en ce que la densité de chauffage varie de manière continue de la partie centrale (7) vers les parties extrêmes (8, 9) du dispositif chauffant (7, 8, 9).

4. Appareil selon la revendication 1 ou revendication 2, caractérisé en ce que la densité de chauffage est relativement élevée dans la partie centrale du dispositif (7, 8, 9) et relativement basse dans les parties extrêmes (8, 9) de celui-ci, et les parties extrêmes (8, 9) sont espacées de la partie centrale (7) par des parties du dispositif chauffant (7, 8, 9) qui n'ont qu'une très basse densité de chauffage.

5. Appareil selon l'une quelconque des revendications, caractérisé en ce que cet appareil comporte en outre un moyen pour détecter la température du dispositif chauffant linéaire (7, 8, 9).

FIG. 1

FIG. 2

FIG. 3

FIG. 4

FIG. 5